# EUROPEAN PATENT APPLICATION

(11) **EP 4 407 197 A1**
(43) Date of publication of application: **31.07.2024**
(21) Application number: 23153109.6
(22) Date of filing: 24.01.2023
(51) Int. Cl.: F16B 13/14

(54) **CENTERING DEVICE, CENTERING SYSTEM AND PROCESS FOR ATTACHING A SCREW OR A BOLT TO AN OBJECT**

(71) Applicant: medmix Switzerland AG, 9469 Haag (Rheintal) (CH)
(72) Inventor: The designation of the inventor has not yet been filed
(74) Representative: Manitz Finsterwald Patent- und Rechtsanwaltspartnerschaft mbB

(57) **Abstract**

The invention is directed at a centering device for centering a screw or a bolt in a hole, defining an outer circumferential surface configured to be brought in contact with an inner circumferential surface of the hole, defining an inner circumferential surface configured to be brought in contact with an outer circumferential surface of the screw or the bolt, and a connecting portion connecting the outer surface and the inner surface, wherein the connecting portion is configured to maintain an approximately constant distance between the inner surface and the outer surface along a circumference of the centering device, wherein the centering device forms multiple flow-through openings in the inner circumferential surface and wherein the multiple flow-through openings are distributed around the circumference of the centering device.

The invention is also directed at a process for attaching a screw or a bolt to an object, comprising: forming a hole in the object, the hole having a center axis and a diameter greater than a diameter of the screw or bolt, applying filling material into the hole to partly fill the hole with the filling material, attaching a centering device as described above to the screw or bolt so that an inner surface of the centering device abuts an outer circumferential surface of the screw or bolt, and inserting the screw or bolt together with the centering device into the hole in the object so that an outer surface of the at least one centering device abuts an inner circumferential surface of the hole and so that the filling material enters the flow-through openings formed in the at least one centering device.

## Description

The present invention relates to a centering device for centering a screw or a bolt in a hole.

Such a centering device for centering a screw or a bolt in a hole is used in construction for chemical anchoring, i.e. for bonding an anchor, i.e. a screw or a bolt, to a substrate, usually masonry and/or concrete, using a resin-based adhesive system. Such a centering device is configured to align a longitudinal axis of the anchor with a longitudinal axis of the hole, i.e. for centering the screw or a bolt in the hole, when an outer diameter of the screw or bolt is smaller than a diameter of the hole provided in the substrate.

For this purpose, the centering device defines an outer circumferential surface configured to be brought in contact with an inner circumferential surface of the hole and an inner circumferential surface configured to be brought in contact with an outer circumferential surface of the screw or the bolt. Such a centering device further forms a connecting portion connecting the outer surface and the inner surface. For centering the screw or bolt in the hole, the connecting portion is configured to maintain an approximately constant distance between the inner surface and the outer surface along a circumference of the centering device.

Currently known centering devices cover the anchor, i.e. the screw or bolt, at the respective section of the anchor so that the resin-based adhesive does not get in contact with the anchor at the section where the centering device is placed around the anchor. Therefore, a force that can be transmitted from the screw or bolt to the adhesive and therefore to the substrate is limited due to the centering device.

It is an object of the invention to provide a centering device that allows a higher force to be transmitted from the screw or bolt to a substrate surrounding the screw or bolt.

The object is satisfied by a device having the features of claim 1 and in particular wherein the centering device forms multiple flow-through openings in the inner circumferential surface and wherein the multiple flow-through openings are distributed around the circumference of the centering device.

Due to these flow-through openings, the adhesive system can get in contact with a larger outer circumferential surface of the screw or bolt because less of the outer circumferential surface of the screw or bolt is covered by the centering device. Therefore, the connection between the screw or bolt and the substrate is stronger.

Embodiments of the device are defined by the dependent claims and described in the following disclosure.

Preferably, the flow-through openings extend from the outer circumferential surface of the centering device to the inner circumferential surface of the centering device. Alternatively or additionally, the flow-through openings can extend from a face of the centering device to the inner circumferential surface of the centering device. The flow-through openings may also be called through-holes.

According to one embodiment, the centering device comprises multiple bars extending in a longitudinal direction. The multiple bars can form, i.e. define, borders of the flow-through openings. Each bar can form a border of at least two neighboring flow-through openings.

According to an embodiment, the multiple bars form the inner surface of the centering device. In other words, the multiple bars can define an inner circumference of the centering device along the longitudinal axis of the centering device. Alternatively or additionally, the multiple bars can form the outer surface of the centering device.

According to an embodiment, the multiple bars are spaced from each other in the circumferential direction. The multiple bars can be spaced from each other by a predetermined distance so that the distance between the bars defines a width of the flow-through openings. Preferably, the multiple bars are spaced equally from each other in the circumferential direction. In other words, the multiple bars are arranged at equal distances from each other around the circumference of the centering device.

According to an embodiment, some of the multiple bars extend from one end of the centering device to the other end of the centering device. Preferably, the multiple bars are configured to define and keep a distance between the two end faces of the centering device.

According to an embodiment, all of the multiple bars extend from one end of the centering device to the other end of the centering device. Alternatively, some of the multiple bars do not extend from the one end of the centering device to the other end of the centering device but instead form cantilever beams, i.e. are only connected to one end of the centering device.

According to an embodiment, the centering device comprises at least one connecting element that extends in a circumferential direction and is configured to hold at least some, preferably all, of the multiple bars in a relative position to each other. The at least one connecting element is preferably formed integrally with the bars. The connecting element can form a border of the flow-through openings. Preferably, the connecting element extends in a direction perpendicular to the bars. The word "extends" means that this is the main extension of the respective part. For example, the bars extend in the longitudinal direction means that the bars mainly extend in the longitudinal direction.

According to an embodiment, at least a majority of the flow-through openings are each defined by two bars and two connecting elements being connected together to form a frame. Preferably, all flow-through openings are each defined by two bars and two connecting elements being connected together to form a frame.

According to an embodiment, the at least one connecting element extends along a majority of the circumference of the centering device. According to one embodiment, the at least one connecting element can have an open circumference. This may allow to attach the centering device to the screw or bolt from a radial direction. Alternatively, the at least one connecting element can have a closed circumference. In other words, the at least one connecting element can form a full circle in a cross section. In this case, the centering device should be configured to be attached to the screw or bolt from an axial direction. This feature has the advantage that the centering device is more robust.

According to an embodiment, the centering device forms at least one radially elastically deformable portion. Preferably, the centering device forms multiple radially elastically deformable portions. The at least one radially elastically deformable portion or the multiple radially elastically deformable portions can be arranged along the circumference, i.e. the inner and/or outer circumference, of the centering device. The at least one radially elastically deformable portion is preferably part of the connecting portion. This allows the centering device to elastically adjust to a size of the hole and/or a size of the screw or bolt.

According to an embodiment, the at least one radially elastically deformable portion forms at least a section of the outer circumferential surface of the centering device. Preferably, multiple radially elastically deformable portions together form at least a section of the outer circumferential surface of the centering device.

According to an embodiment, the at least one radially elastically deformable portion is formed by multiple cantilever beams. The cantilever beams preferably extend obliquely to a longitudinal axis of the centering device. Alternatively, the cantilever beams may extend in the longitudinal direction but their radial dimensions may increase towards the free end. Preferably, the cantilever beams each form a section with an increased radial dimension that together form an outer circumferential surface that is configured to get in contact with an inner circumferential surface of the hole. Preferably, the multiple cantilever beams extend in a direction opposite to the direction in which the screw or bolt equipped with the centering device is inserted into the hole. This has the advantage that the multiple cantilever beams either extending obliquely to the longitudinal axis of the centering device or increasing regarding their radial dimension each form a lead-in cantilever centering the centering device in the hole. Additionally, if the multiple cantilever beams extend in the direction opposite to the direction in which the screw or bolt equipped with the centering device is inserted into the hole, there is less risk that the cantilever beams block the insertion movement. Preferably, the multiple cantilever beams extend obliquely to a longitudinal axis of the centering device forming an angle of 5° to 60° with the longitudinal axis of the centering device.

According to an embodiment, the centering device comprises a ring-shaped section with an outer diameter greater than an outer diameter of said outer circumferential surface that is configured to be brought in contact with the inner circumferential surface of the hole. In other words, the centering device forms the outer circumferential surface that is configured to be brought in contact with the inner circumferential surface of the hole and a ring-shaped section, preferably adjacent to the said circumferential surface, that has an outer diameter greater than the outer diameter of the circumferential surface that is configured to be brought in contact with the inner circumferential surface of the hole. The outer circumferential surface of the ring-shaped section may be larger than the outer diameter of said outer circumferential surface that is configured to be brought in contact with the inner circumferential surface of the hole in a state when the centering device is not inserted into a hole. Alternatively or additionally, the outer circumferential surface of the ring-shaped section may be larger than the outer diameter of said outer circumferential surface that is configured to be brought in contact with the inner circumferential surface of the hole in a state when the centering device is inserted into a hole. The ring-shaped section preferably forms an axial end section of the centering device. Preferably, the ring-shaped section provides an axial surface that is configured to abut an edge around an opening defined by the hole. This simplifies entering only a predetermined section of the screw or bolt into the hole. In order to retain filling material in the hole, the ring-shaped section preferably forms a continuous ring-shaped surface facing in the axial direction.

According to an embodiment, the centering device has an open first face for inserting an end of a screw or bolt and an axial stop to limit axial movement of the screw or bolt relative to the centering device. Preferably, the axial stop comprises one or more elements that extend in a radial direction towards a center line of the centering device. According to one embodiment, the axial stop can be formed by multiple bars that each extend towards a center line of the centering device. In order to make sure that face of the screw or bolt safely abuts the axial stop, a continuous, e.g. disc shaped, end surface can be formed in a middle section of the axial stop. According to an embodiment, the axial stop forms a second face of the centering device. In other words, the axial stop can be positioned in an axial end section of the centering device covering at least a portion of a face of the centering device.

According to an embodiment, the centering device can be shaped like a thimble, i.e. can have an outer circumferential surface that tapers towards an at least partially closed front face.

According to an embodiment, the centering device is made from plastic. The centering device can be designed in a one-piece design. According to an embodiment, the centering device is made from injection molding.

The problem is also solved by a centering system comprising two such centering devices. Preferably, the two centering devices are configured to be attached to the screw or bolt distanced from each other in a longitudinal directed of the screw or bolt. For example, one of the centering devices can be attached to the screw or bolt at an end section of the screw or bolt that is inserted in the hole first and the other one of the centering devices can be attached to the same screw or bolt at a section close to a head of the screw or a nut attached to the bolt.

Preferably, the centering device that is attached to the screw or bolt at the end section of the screw or bolt that is inserted in the hole first may form the aforementioned axial stop. The other centering device, e.g. the centering device that is attached to the screw or bolt at a section close to the head of the screw or close to the nut attached to the bolt, may form the aforementioned ring-shaped section with the outer diameter that is greater than the outer diameter of said outer circumferential surface that is configured to be brought in contact with the inner circumferential surface of the hole. If the outer diameter of said outer circumferential surface that is configured to be brought in contact with the inner circumferential surface of the hole is changeable, e.g. because it is defined by the elastically deformable cantilever beams, the outer diameter of said outer circumferential surface that is configured to be brought in contact with the inner circumferential surface of the hole is preferably measured when the centering device is positioned inside a hole that has an inner diameter suitable for the centering device.

According to an embodiment, the centering device forms an inner thread in the inner circumferential surface. The thread may be configured to engage with an outer thread of the screw or bolt. This may improve the connection and/or alignment between the centering device and the screw or bolt.

According to an embodiment, the centering device may form at least one lead-in chamfer extending around the circumference of the centering device. The lead-in chamfer is configured to simplify insertion of the centering device into the hole. The lead-in chamfer preferably extends in an axial direction to the end of the centering device that is configured to be entered into the hole first.

A further independent object of the disclosure is a centering device with an outer circumferential surface configured to be brought in contact with an inner circumferential surface of the hole and an inner circumferential surface configured to be brought in contact with an outer circumferential surface of the screw or the bolt and a connecting portion connecting the outer surface and the inner surface, wherein the connecting portion is configured to maintain an approximately constant distance between the inner surface and the outer surface along a circumference of the centering device, and wherein the centering device has an open first face for inserting an end of a screw or bolt and an axial stop to limit axial movement of a tip of the screw or bolt relative to the centering device.

Preferably, the axial stop comprises one or more elements that extend in a radial direction towards a center line of the centering device. According to one embodiment, the centering device has a first open face and wherein the axial stop is formed by an element covering a second face of the centering device at least around a center defined by a center line of the centering device. In order to make sure that a face of the screw or bolt safely abuts the axial stop, a continuous, e.g. disc shaped, end surface can be formed at least in a middle section of the axial stop.

According to an embodiment, the axial stop forms a fully closed second face of the centering device. In other words, the axial stop can be positioned in an axial end section of the centering device covering a face of the centering device completely.

According to an embodiment, the centering device can be shaped like a thimble, i.e. can have an outer circumferential surface that tapers towards a closed front face.

According to an embodiment, the centering device is made from plastic. The centering device can be designed in a one-piece design. According to an embodiment, the centering device is made from injection molding.

According to an embodiment, the centering device has a closed circumferential surface, i.e. does not form any through-holes in the circumferential surface.

According to an embodiment, the centering device forms an inner thread in the inner circumferential surface.

According to one embodiment, the centering device comprises multiple elevations on its outer surface extending in a longitudinal direction.

According to an embodiment, the multiple elevations are spaced from each other in the circumferential direction. The multiple elevations can be spaced from each other by a predetermined distance. Preferably, the multiple elevations are spaced equally from each other in the circumferential direction. In other words, the multiple elevations are arranged at equal distances from each other around the circumference of the centering device.

According to an embodiment, the multiple elevations extend approximately from one end of the centering device to the other end of the centering device.

The aforementioned centering device may be used as a centering device that is attached to the screw or bolt at an end section of the screw or bolt that is inserted in the hole first.

It is a further object of the invention to provide a process for attaching a screw or a bolt to an object, e.g. via chemical anchoring, that creates a connection between the screw or the bolt and the object that allows a higher force to be transmitted from the screw or bolt to the object, i.e. the substrate, surrounding the screw or bolt.

The object is satisfied by a process for attaching a screw or a bolt to an object, comprising:
- forming a hole in the object, the hole having a center axis and a diameter greater than a diameter of the screw or bolt,
- applying filling material into the hole to partly fill the hole with the filling material,
- attaching a centering device or centering system according to any one of the embodiments discussed in this application to the screw or bolt so that an inner surface of the at least one centering device abuts an outer circumferential surface of the screw or bolt, and
- inserting the screw or bolt together with the centering device or centering system into the hole in the object so that an outer surface of the at least one centering device abuts an inner circumferential surface of the hole and so that the filling material enters the flow-through openings formed in the at least one centering device.

Due to these flow-through openings, the filling material can get in contact with a larger area of the outer circumferential surface of the screw or bolt and therefore, a better connection between the screw or the bolt and the filling material and therefore the object is established.

According to an embodiment, the applying of the filling material into the hole is done before the inserting of the screw or bolt. Thereby, the filling material can be distributed around the screw or bolt by inserting the screw or bolt together with the centering device or centering system into the hole.

The filling material can be made of any material that cures over time, i.e. that is in a liquid or pasty state when applied to the hole but hardens over time or when brought in contact with a curing agent. Preferably, the filling material comprises a resin material, i.e. a synthetic resin material. The filling material preferably is a resin-based adhesive. The filling material can include at least 80% resin material. The object can be at least partially made from concrete. The object is preferably made from masonry and/or concrete. For example, the object can be a wall or a ceiling of a building.

According to an embodiment, the forming of the hole comprises a drilling of the hole. The drilling of the hole is preferably done with a hand drill such as an electrical hand drill.

In order to make sure that the screw or bolt is safely connected to the object, the process may comprise a cleaning of the hole, e.g. with a brush and/or compressed air, prior to the applying of the filling material into the hole.

According to an embodiment, the inserting of the screw or bolt together with the centering device or centering system comprises rotating the screw or bolt around its longitudinal axis. If the bolt is a threaded bolt, the screw or bolt can be rotated around its longitudinal axis in a direction of a thread of the screw or bolt to reduce the force needed for inserting the screw or bolt.

According to an embodiment, the process further comprises waiting for a setting time of the filling material to pass and afterwards applying a tightening torque to the screw or bolt. This provides a safer connection between the screw or bolt and the object.

Further aspects of the invention are described in the following description of the Figures. The invention will be explained in the following in detail by means of embodiments and with reference to the drawings in which is shown:
- Fig. 1A: depicts a centering system consisting of two centering devices according to embodiments of the invention in a perspective view;
- Fig. 1B: depicts a first centering device of the two centering devices of Fig. 1A in a perspective view;
- Fig. 2A: depicts the first centering device of Fig. 1B in a side view;
- Fig. 2B: depicts a front view of the first centering device of Fig. 1B;
- Fig. 3A: depicts a second centering device of the two centering devices of Fig. 1A in a perspective view;
- Fig. 3B: depicts the second centering device of Fig. 3A in a side view;
- Fig. 4A: depicts a front view of the second centering device of Fig. 3A;
- Fig. 4B: depicts a side view of the centering system of Fig 1A;
- Fig. 5A: depicts a side view of the centering system of Fig. 1A attached to a threaded bolt;
- Fig. 5B: depicts a side view of the centering system of Fig. 1A attached to a threaded bolt and inserted into a hole formed in an object, wherein the object is depicted in a sectional view to be able to see the centering system and the threaded bolt;
- Fig. 6A: depicts a first step of a process for attaching the bolt to the object using the centering system of Fig. 1A;
- Fig. 6B: depicts a second step of the process for attaching the bolt to the object using the centering system of Fig. 1A;
- Fig. 6C: depicts a third step of the process for attaching the bolt to the object using the centering system of Fig. 1A;
- Fig. 7A: depicts a centering device not covered by the current set of claims in a first perspective view;
- Fig. 7B: depicts a second perspective view of the centering device of Fig. 7A;
- Fig. 7C: depicts a top view of the centering device of Fig. 7A;
- Fig. 7D: depicts a sectional view of the centering device of Fig. 7C along line A-A;
- Fig. 7E: depicts a detailed sectional view of area E in Fig. 7D;
- Fig. 8A: depicts a further centering device according to embodiments of the invention in a perspective view;
- Fig. 8B: depicts a top view of the centering device of Fig. 8A;
- Fig. 8C: depicts a sectional view along line G-G of Fig. 8B;
- Fig. 8D: depicts a sectional view along line C-C of Fig. 8B;
- Fig. 8E: depicts a sectional view along line D-D of Fig. 8D;
- Fig. 8F: depicts a detailed sectional view of area F of Fig. 8D; and
- Fig. 8G: depicts a detailed sectional view of area J of Fig. 8D.

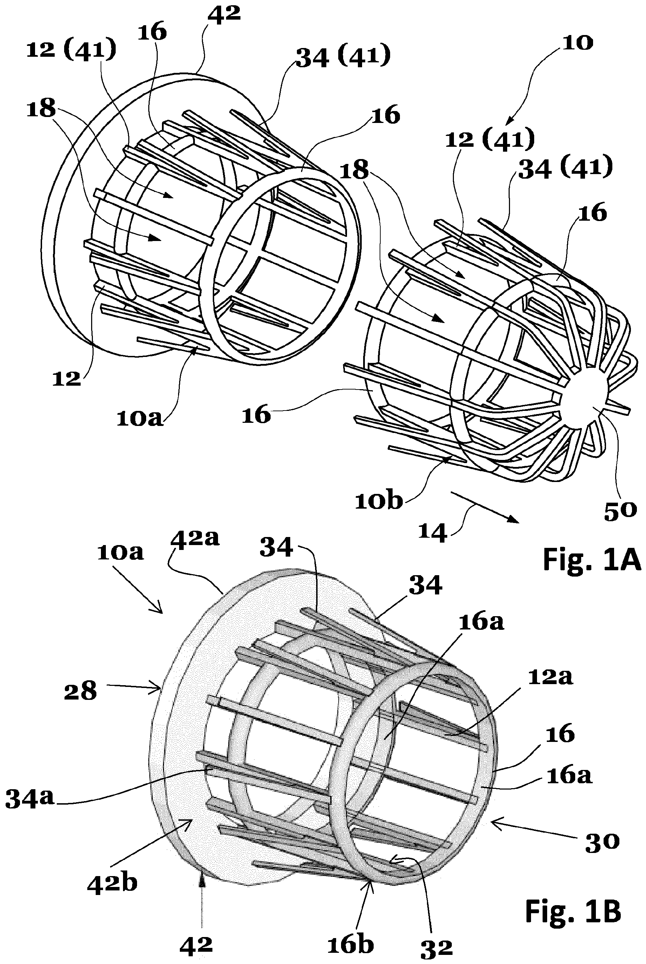

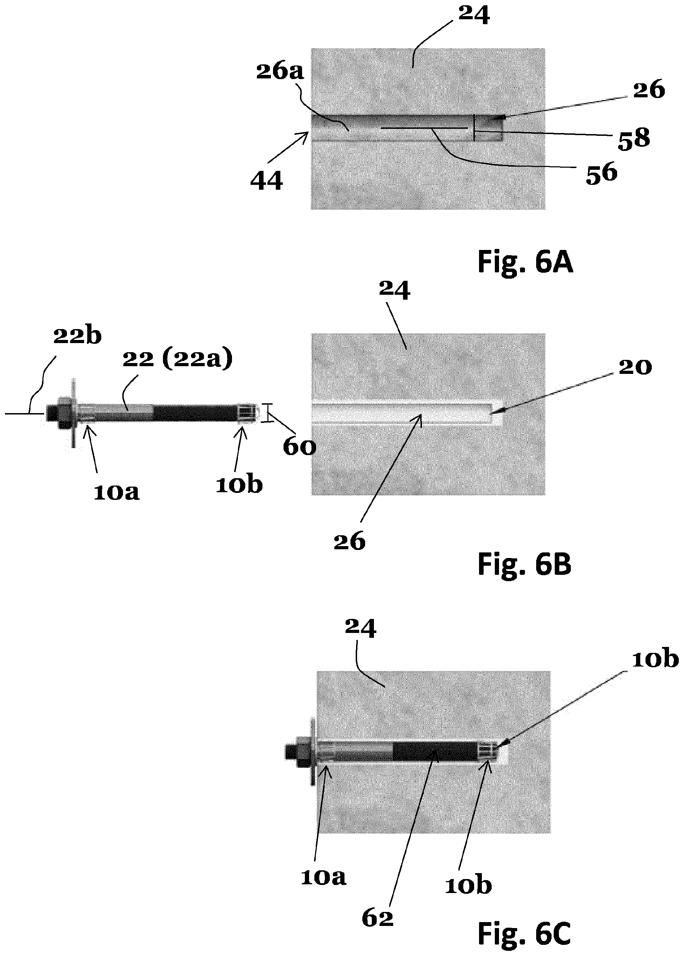

Fig. 1A depicts a centering system 10 with a first centering device 10a and a second centering device 10b. The first centering device 10a and the second centering device 10b each are made from plastic in a one-piece design. Each of the centering devices 10a and 10b is generally formed by multiple bars 12 extending in a longitudinal direction 14 and ring-shaped connecting elements 16 extending in a circumferential direction and mechanically connecting the multiple bars 12. The bars 12 and the connecting elements 16 define rectangular flow-through openings 18 that allow a filling material 20 (see Fig. 6B) to get in contact with a screw or bolt 22 by flowing through the openings 18 onto an outer circumferential surface 22a of the screw or bolt 22.

The first centering device 10a is configured to be mounted onto the screw or bolt 22 at an axial position where the screw or bolt 22 protrudes out of an object 24, e.g. a concrete wall, (see Fig. 6C) when the screw or bolt 22 is inserted into a hole 26 drilled into that object 24. The second centering device 10b is configured to be mounted onto the screw or bolt 22 at an axial position forming the "tip" of the screw or the bolt 22. In other words, the second centering device 10b is formed to be attached to an end section of the screw or bolt 22 which is configured to be inserted into the hole 26 first.

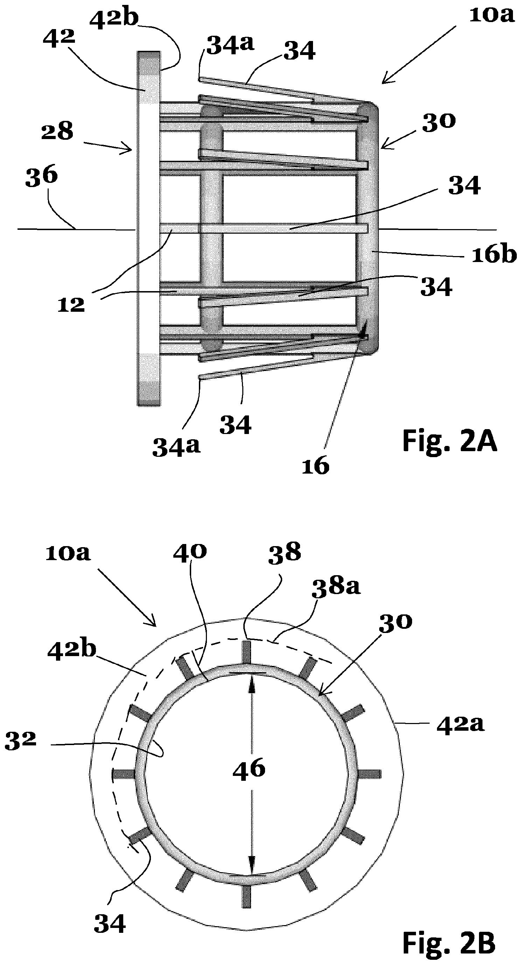

In the following, a more detailed description of the first centering device 10a will be given referring to Figs. 1B, 2A and 2B. The first centering device 10a defines a first open end face 28 and a second open end face 30. Each end face 28, 30 is defined by one of the ring-shaped connecting elements 16 connecting the multiple bars 12. Inner surfaces 12a of the bars 12 and inner circumferential surfaces 16a of the connecting elements 16 define an inner circumferential surface 32 of the first centering device 10a. As can be best seen in Fig. 2A, the first centering device 10a comprises multiple cantilever beams 34 each extending obliquely to a longitudinal axis 36 of the centering device 10a. These cantilever beams 34 have distal ends 34a that together form an outer circumferential surface 38 (see Fig. 2B) of the centering device 10a that is configured to be brought in contact with an inner circumferential surface 26a of the hole 26 when the hole 26 is partially filled with the filling material 20. The cantilever beams 34 are radially elastically deformable relative to the bars 12 to adjust a functional thickness 40 (see Fig. 2B) of the centering device 10a, i.e. a shortest distance between the inner circumferential surface 32 and the outer circumferential surface 38 of the centering device 10a. As can be seen e.g. in Fig. 2A, each of the cantilever beams 34 is aligned regarding its radial orientation to one of the bars 12.

In order to avoid that filling material 20 exits the hole 26 when the screw or bolt 22 is inserted into the hole 26, the first centering device 10a forms a ring-shaped section 42 with an outer diameter 42a greater than an outer diameter 38a of said outer circumferential surface 38 configured to be brought in contact with the inner circumferential surface 26a of the hole 26. In other words, the ring-shaped section 42 forms an axial surface 42b that is configured to abut a border area around an opening 44 (see Fig. 6A) of the hole 20. As can be seen from Fig. 1B, the axial surface 42b is a full surface, i.e. there are no through-holes in that surface. As can be best seen in Fig. 2A, the ring-shaped section 42 forms an axial end section of the centering device 10a. In order to avoid unnecessary friction with the inner circumferential surface 26a of the hole 26 when inserting the centering device 10a, outer circumferential surfaces 16b of at least some of the connecting elements 16 are convex surfaces, i.e. the outer surfaces of the connecting elements 16 are curved in two directions.

Fig. 2B depicts an inner diameter 46 of the centering device 10a. The inner diameter 46 of the centering device 10a is constant or approximately constant along the longitudinal axis 36 of the centering device 10a. The inner diameter 46 of the centering device 10a should be adjusted to an outer diameter 60 of the screw or bolt 22 so that the inner diameter 46 of the centering device 10a is e.g. about 0,5 mm larger than the outer diameter of the screw or bolt 22.

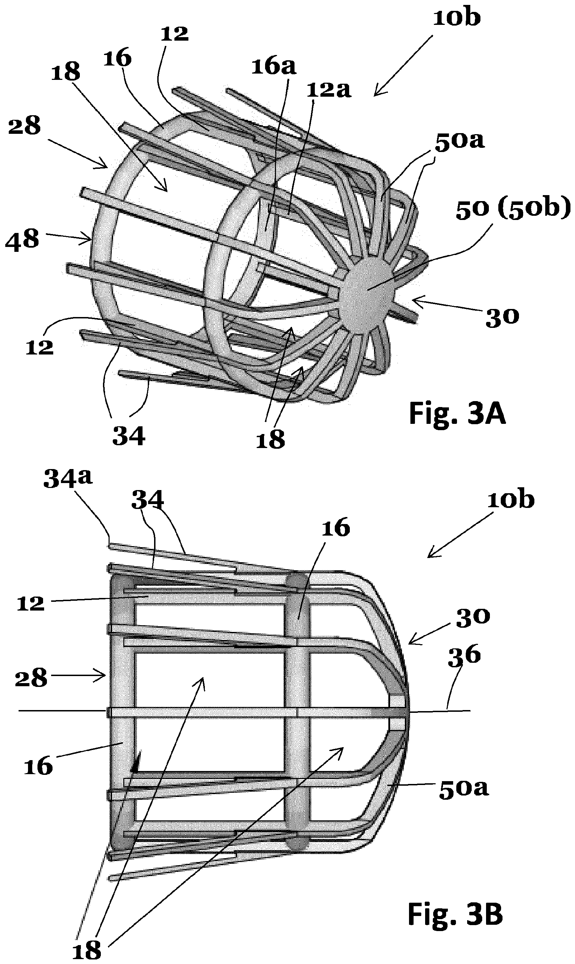

Referring to Figs. 3A to 4A, in the following, the second centering device 10b is described in more detail. The second centering device 10b also defines a first end face 28 and a second end face 30. However, while the first end face 28 is - like the end faces 28 and 30 of the first centering device 10a - is an open end face defined by a ring-shaped connecting element 16 and therefore forms an opening 48 (see Fig. 3A) for inserting the screw or bolt 22, the second end face 30 of the second centering device 10b is formed by an axial stop 50 to limit axial movement of the screw or bolt 22 relative to the second centering device 10b. The axial stop 50 is formed by multiple radially extending bars 50a that are all connected to a disc-shaped face portion 50b arranged in a middle section of the end face 30. As can be seen e.g. in Fig 3A, the end face 30 also forms flow-through openings 18. These flow-through openings 18 extend from the end face 30 of the second centering device 10b to the circumference of the second centering device 10b.

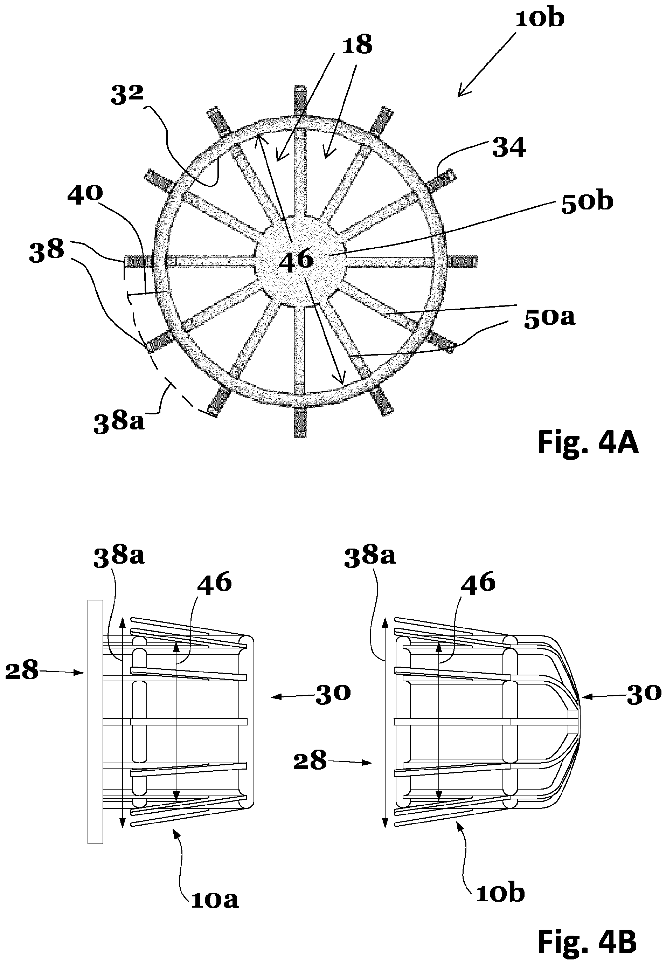

Like it has already been described in conjunction with the first centering device 10a, also the second centering device 10b comprises longitudinally extending bars 12 and circumferentially extending connecting elements 16 connecting the bars 12. Inner surfaces 12a of the bars 12 and inner circumferential surfaces 16a of the connecting elements 16 define an inner circumferential surface 32 (see Fig. 4A) of the second centering device 10b. Like the first centering device 10a, the second centering device 10b comprises multiple cantilever beams 34 each extending obliquely to a longitudinal axis 36 of the centering device 10b. These cantilever beams 34 also have distal ends 34a that together form an outer circumferential surface 38 (see Fig. 4A) of the centering device 10b that is configured to be brought in contact with an inner circumferential surface 26a of the hole 26 when the hole 26 is partially filled with the filling material 20. The cantilever beams 34 are also radially elastically deformable relative to the bars 12 to adjust a functional thickness 40 of the centering device 10b, i.e. a distance between the inner circumferential surface 32 and the outer circumferential surface 38 of the centering device 10a. The entirety of the structural components connecting the inner circumferential surface 32 and the outer circumferential surface 38 of the centering devices 10a and 10b is considered a connecting portion 41 (see Fig. 1A) of the centering device 10a, 10b. The connecting portion 41 is configured to maintain an approximately constant distance between the inner circumferential surface 32 and the outer circumferential surface 38 along a circumference of the centering device 10a, 10b. In other words, in the shown embodiment, the cantilever beams 34 all have the same stiffness to make sure that the centering devices 10a, 10b can be positioned in radially central position of the hole. As can be seen e.g. in Fig. 2A and 3B, each of the cantilever beams 34 of the first and second centering devices 10a, 10b is aligned regarding its radial orientation to one of the bars 12.

As can be seen best in Fig. 1A, the cantilever beams 34 of the first and second centering device 10a, 10b both extend in a direction away from a direction of insertion. In other words, the cantilever beams 34 each form a lead-in cantilever centering the centering device 10a, 10b in the hole 26.

As can be seen in Fig. 4B the first and second centering devices 10a, 10b essentially have the same inner diameter 46 and the same outer diameter 38a. In other words, they have essentially the same size regarding their diameters.

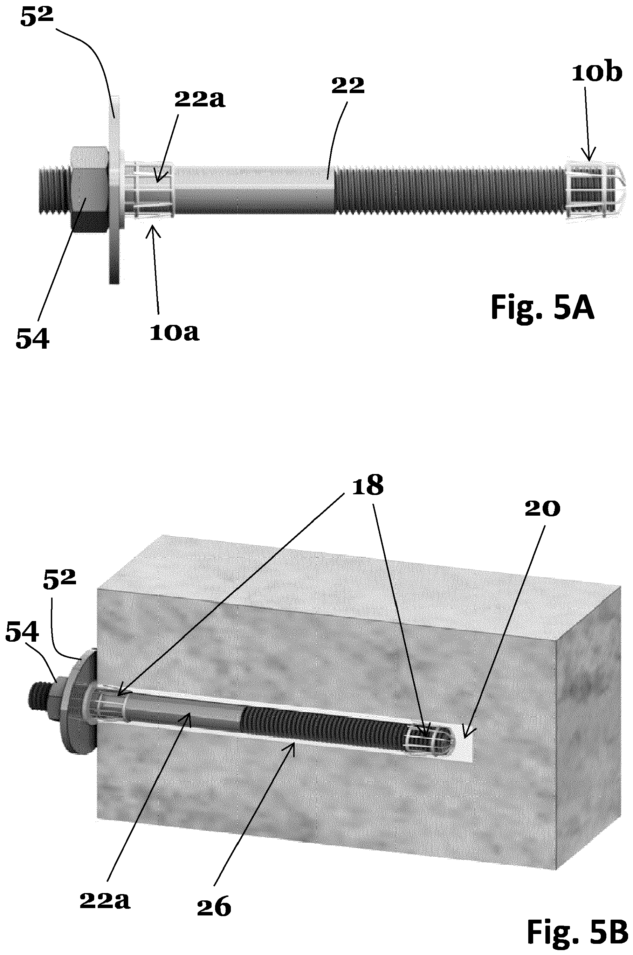

Fig. 5A depicts the centering system 10 comprising the first centering device 10a and the second centering device 10b attached to the threaded bolt 22. The two separate centering devices 10a, 10b are attached to the bolt 22 distanced from each other in a longitudinal, i.e. axial, direction of the bolt 22. In particular, the first centering device 10a is attached at the axial position where the bolt 22 is meant to protrude out of the object 24, e.g. a concrete wall. In this embodiment, a flat washer 52 is connected to the bolt 22 and axially blocked by a nut 54 screwed onto the bolt 22. Instead of the bolt 22 with the flat washer 52 and the nut 54, a screw with a head could be used. The first centering device 10a is attached to the bolt 22 adjacent to the flat washer 52. The second centering device 10b is put over a tip section of the bolt 22 on an opposite end of the bolt 22. Due to the relatively large distance between the two centering devices 10a, 10b, the centering system 10 precisely centers the bolt 22 in the hole 26.

Fig. 5B depicts the bolt 22 with the centering system 10 attached to the bolt 22 arranged inside the hole 26. Due to the flow-through openings 18 that are equally distributed around the circumference of the first and second centering devices 10a, 10b, the filling material 20, e.g. a resin, that was previously applied into the hole 26, can contact the outer circumferential surface 22a of the bolt 22 through the flow-through openings 18.

In Figs. 6A to 6C a process for attaching the bolt 22 to an object 24 in the form of a concrete wall is shown. Fig. 6A shows a first step wherein a hole 26 is formed in the object 24. The hole 26 has a center axis 56. Furthermore, the hole 26 has a diameter 58 greater than the diameter 60 of the bolt 22. The hole 26 is drilled with an electric hand drill (not shown). After the drilling of the hole 26, the process can comprise a cleaning of the hole 26, e.g. with a brush and/or compressed air.

In a second step implied in Fig. 6B, filling material 20 in form of a resin material is applied into the hole 26 to partly fill the hole 26 with the filling material 20. Contrary to Fig. 6B, the filling material is usually not distributed along the inner circumferential surface 26a of the hole 26 at first. Instead, only after the bolt 22 with the attached centering system 10 is inserted, the filling material 20 is pushed away by the bolt 22 and distributed along the inner circumferential surface 26a of the hole 26. To do so, the next step of the process is to attach the two centering devices 10a, 10b to the bolt 22 so that the inner circumferential surfaces 32 of the centering devices 10a, 10b each abut the outer circumferential surface 22a of the bolt 22. Afterwards, in the next process step, the bolt 22 together with the centering devices 10a, 10b is inserted into the hole 26 drilled in the object 24 such that the outer circumferential surfaces 38 of both centering devices 10a, 10b abut the inner circumferential surface 26a of the hole 26 and so that the filling material 20 enters the flow-through openings 18 formed in both of the centering devices 10a, 10b. In order to reduce the force needed to insert the bolt 22 into the hole 26, the bolt 22 is rotated around its longitudinal axis 22b. In a last step, after a setting time of the filling material 20 has ended, a tightening torque in a direction of a thread 62 formed on the outer circumferential surface 22a of the bolt 22 may be applied to the bolt 22.

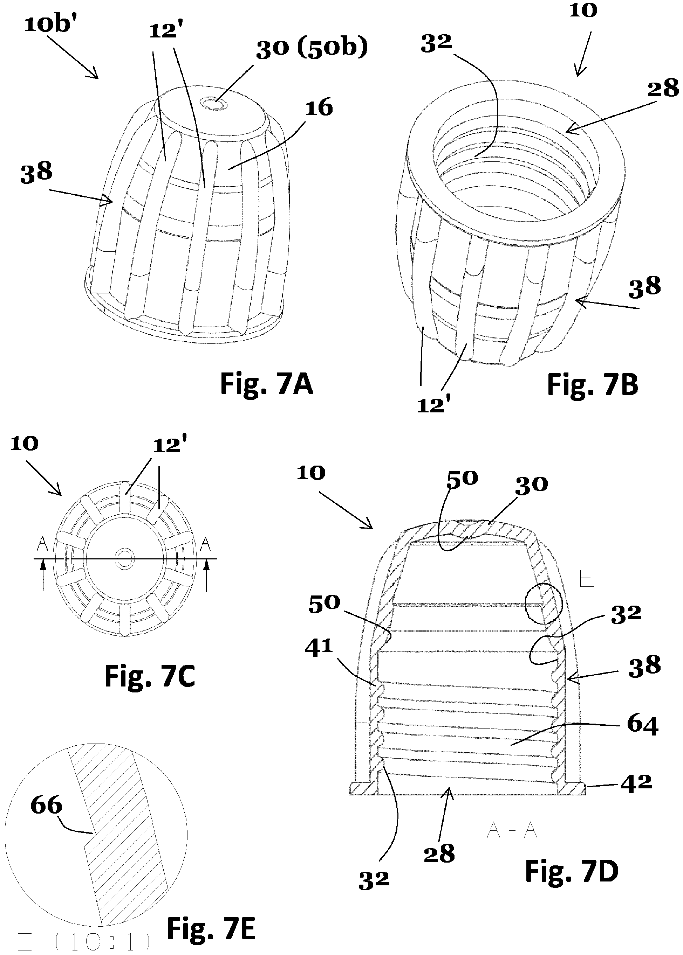

Figures 7A to 7E depict a further embodiment of a second centering device 10b' that is configured to be attached to a front end of a screw or bolt 22. While the depicted version does not have any flow-through holes 18 formed in the circumferential surface, therefore having a closed circumferential surface, it is noted that e.g. in an area between elevations 12' through holes could be formed.

The second centering device 10b' defines a first open end face 28 and a second closed end face 30. The closed end face 30, depending on the shape of the screw or bolt, may form an axial stop 50 (see Fig. 7D) which is configured to limit an insertion movement of the bolt or screw 22 into the second centering device 10b'. Alternatively, a tapering section at the inner circumferential surface 32 may form the axial stop 50 (see Fig. 7D).

The second centering device 10b' forms an inner thread 64 (see Fig. 7D) that is configured to engage with a thread 62 of the screw or bolt 22. This feature allows a robust and precise connection between the centering device 10b' and the screw or bolt 22.

On an outer circumferential surface 38 of the centering device 10b', elevations 12' are formed that extend from one end section of the centering device 10b' to the other end section of the centering device 10b'. The elevations 12' have a convex outer surface to decrease friction between the centering device 10b' and the inner circumferential surface 26a of the hole 26 during insertion.

As can be seen e.g. from Fig. 7A and 7D, the centering device 10b' tapers towards the end having the closed end face 30. This simplifies inserting the centering device 10b' into the hole 26.

As can be seen in Fig. 7E, in a section not covered by the inner thread 64, an undercut or groove 66 is formed.

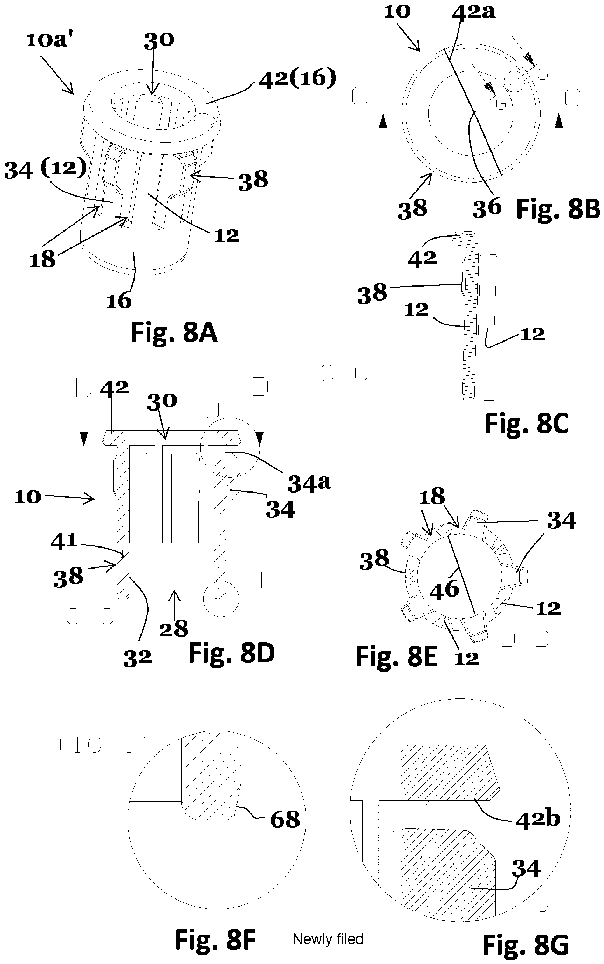

In Figures 8A to 8G a second embodiment of a first centering device 10a' is shown. Generally, this embodiment is more robust than the above discussed first centering device 10a. The first centering device 10a' is generally shaped cylindrically and forms multiple bars 12 that extend in a longitudinal direction from a first connecting element 16 to a second connecting element 16 each having a circular ring-shaped cross section. One of the connecting elements 16 is formed as a ring-shaped section 42 having an outer diameter 42a that is larger than an outer diameter formed by the bars 12.

The ring-shaped section 42 forms an axial end section of the centering device 10a'. The ring-shaped section 42 provides an axial surface 42b (see Fig. 8G) that is configured to abut an edge around an opening 44 defined by a hole 26.

As can be best seen in Figs. 8A and 8E, cantilever beams 34 are arranged between the bars 12 that extend in a longitudinal direction from a first connecting element 16 to a second connecting element 16. The cantilever beams 34 extend in parallel to the longitudinal axis 36 of the centering device 10a'. The cantilever beams 34 form a section that has an increased radial dimension close to a free distal end 34a. This section with the increased radial dimension forms an outer circumferential surface 38 that is configured to be brought in contact with the inner circumferential surface 26a of the hole 26. The cantilever beams 34 are configured to be bent inwardly.

As can be best seen in Fig. 8C, the sections with the increased radial dimension formed on the cantilever beams 34 form an outer circumferential surface 38 that, in a state when the cantilever beams 34 are not deformed, has a larger diameter than the outer circumferential surface formed by the bars 12. In other words, the outer surface 38 of the sections with the increased radial dimension is distanced further from a longitudinal axis 46 of the centering device 10a' than an outer surface of the bars 12.

As can be seen in Fig. 8F, the centering device 10a' forms a lead-in chamfer 68 in an end section opposite to the ring-shaped section 42 to reduce friction when the screw or bolt 22 with the centering device attached to the screw or bolt 22 is inserted into the hole 26.

### List of reference numerals:

- 10: centering system
- 10a: centering device
- 10b: centering device
- 12: bar
- 12': elevation
- 12a: inner surface
- 14: longitudinal direction
- 16: connecting element
- 16a: inner circumferential surface
- 16b: outer circumferential surface
- 18: flow-through opening
- 20: filling material
- 22: bolt
- 22a: outer circumferential surface
- 22b: longitudinal axis
- 24: object
- 26: hole
- 26a: inner circumferential surface
- 28: end face
- 30: end face
- 32: inner circumferential surface
- 34: cantilever beams
- 34a: distal end
- 36: longitudinal axis
- 38: outer circumferential surface
- 38a: outer diameter
- 40: thickness
- 41: connecting portion
- 42: ring-shaped section
- 42a: outer diameter
- 42b: axial surface
- 44: opening
- 46: inner diameter
- 48: opening
- 50: axial stop
- 50a: radially extending bars
- 50b: disc-shaped face portion
- 52: flat washer
- 54: nut
- 56: center axis
- 58: diameter
- 60: diameter
- 62: thread
- 64: inner thread
- 66: groove
- 68: lead-in chamfer

## Claims

1. Centering device (10a, 10b) for centering a screw or a bolt (22) in a hole (26), defining an outer circumferential surface (38) configured to be brought in contact with an inner circumferential surface (26a) of the hole (26), defining an inner circumferential surface (32) configured to be brought in contact with an outer circumferential surface (22a) of the screw or the bolt (22), and a connecting portion (41) connecting the outer circumferential surface (38) and the inner circumferential surface (32), wherein the connecting portion (41) is configured to maintain an approximately constant distance between the inner circumferential surface (32) and the outer circumferential surface (38) along a circumference of the centering device (10a, 10b), **characterized in that**
the centering device (10a, 10b) forms multiple flow-through openings (18) in the inner circumferential surface (32) and wherein the multiple flow-through openings (18) are distributed around the circumference of the centering device (10a, 10b).

2. Centering device (10a, 10b) according to claim 1,
wherein the centering device (10a, 10b) comprises multiple bars (12) extending in a longitudinal direction (14) forming borders of the flow-through openings (18),
preferably wherein the multiple bars (12) form the inner circumferential surface (32) of the centering device (10a, 10b).

3. Centering device (10a, 10b) according to claim 2,
wherein the multiple bars (12) are spaced from each other in the circumferential direction, preferably wherein the multiple bars (12) are spaced equally from each other in the circumferential direction.

4. Centering device (10a, 10b) according to at least one of claims 2 or 3, wherein the centering device (10a, 10b) comprises at least one connecting element (16) forming a border of the flow-through openings (18) that extends in a circumferential direction and is configured to hold the multiple bars (12) in a relative position to each other,
preferably wherein the at least one connecting element (16) extends along a majority of the circumference of the centering device (10a, 10b).

5. Centering device (10a, 10b) according to claim 4,
wherein the at least one connecting element (16) has a closed circumference.

6. Centering device (10a, 10b) according to one of the preceding claims, wherein the centering device (10a, 10b) forms at least one radially elastically deformable portion (34),
preferably wherein the at least one radially elastically deformable portion (34) forms at least a section of the outer circumferential surface (38) of the centering device (10a, 10b).

7. Centering device (10a, 10b) according to claim 6,
wherein the at least one radially elastically deformable portion (34) is formed by multiple cantilever beams (34), preferably wherein the multiple cantilever beams (34) extend obliquely to a longitudinal axis (36) of the centering device (10a, 10b).

8. Centering device (10a, 10b) according to one of the preceding claims, wherein the centering device (10a) comprises a ring-shaped section (42) with an outer diameter (42a) greater than any outer diameter (38a) of said outer circumferential surface (38) configured to be brought in contact with the inner circumferential surface (26a) of the hole (26),
preferably wherein the ring-shaped section (42) forms an axial end section of the centering device (10a).

9. Centering device (10b) according to one of the preceding claims,
wherein the centering device (10b) has an open first end face (28) for inserting an end of a screw or bolt (22) and an axial stop (50) to limit axial movement of the screw or bolt (22) relative to the centering device (10b), preferably wherein the axial stop (50) forms a second end face (30) of the centering device (10b).

10. Centering system (10) comprising two separate centering devices (10a, 10b),
wherein one centering device (10a) is configured according to at least one of claims 1 to 8 and/or one centering device (10b) is configured according to at least one of claims 1 to 7 and 9,
preferably wherein the two separate centering devices (10a, 10b) are configured to be attached to the screw or bolt (22) distanced from each other along a longitudinal axis (22b) of the screw or bolt (22).

11. Process for attaching a screw or a bolt (22) to an object (24), comprising:
forming a hole (26) in the object (24), the hole (26) having a center axis (56) and a diameter (58) greater than a diameter (60) of the screw or bolt (22),
applying filling material (20) into the hole (26) to partly fill the hole (26) with the filling material (20),
attaching a centering device (10a, 10b) according to one of claims 1 to 9 or a centering system (10) according to claim 10 to the screw or bolt (22) so that an inner circumferential surface (32) of the at least one centering device (10a, 10b) abuts an outer circumferential surface (22a) of the screw or bolt (22), and
inserting the screw or bolt (22) together with the centering device (10a, 10b) or centering system (10) into the hole (26) in the object (24) so that an outer circumferential surface (38) of the at least one centering device (10a, 10b) abuts an inner circumferential surface (26a) of the hole (26) and so that the filling material (20) enters the flow-through openings (18) formed in the at least one centering device (10a, 10b).

12. Process according to claim 11,
wherein the applying of the filling material (20) into the hole (26) is done before the inserting of the screw or bolt (22),
and/or
wherein the filling material (20) comprises a resin material,
and/or
wherein the object (24) is at least partially made from masonry or concrete.

13. Process according to claim 11 or 12,
wherein the forming of the hole (26) comprises a drilling of the hole (26), preferably with a hand drill and/or
wherein the process comprises a cleaning of the hole (26), e.g. with a brush and/or compressed air, prior to the applying of the filling material (20) into the hole (26).

14. Process according to any one of claims 11 to 13,
wherein the inserting of the screw or bolt (22) together with the at least one centering device (10a, 10b) or centering system (10) comprises rotating the screw or bolt (22) around its longitudinal axis (22b).

15. Process according to any one of claims 11 to 14,
further comprising waiting until the setting time of the filling material (20) has passed and afterwards applying a tightening torque to the screw or bolt (22).
